# EUROPEAN PATENT SPECIFICATION

(11) **EP 1 950 130 B1**
(45) Date of publication and mention of the grant of the patent: **03.03.2010**
(21) Application number: 06811506.2
(22) Date of filing: 10.10.2006
(51) Int. Cl.: B62K 23/06, A61G 5/04, B62K 5/00

(54) **STEERING DEVICE OF SMALL-SIZED ELECTRIC VEHICLE**
LENKVORRICHTUNG FÜR KLEINES ELEKTROFAHRZEUG
DISPOSITIF DE DIRECTION DE VEHICULE ELECTRIQUE DE PETITE TAILLE

(30) Priority: 16.11.2005 JP 2005331964
(43) Date of publication of application: 30.07.2008
(73) Proprietor: HONDA MOTOR CO., LTD., Tokyo 107-8556 (JP)
(72) Inventor: AMANO, Ai, Wako-shi, Saitama 3510193 (JP); ICHIKAWA, Katsuhisa, Wako-shi, Saitama 3510193 (JP); NAGAOKA, Masatoshi, Wako-shi, Saitama 3510193 (JP); YAMAMOTO, Yasunori, Wako-shi, Saitama 3510193 (JP)
(74) Representative: Piésold, Alexander James
(86) International application number: PCT/JP2006/320193
(87) International publication number: WO 2007/058029

(56) References cited:
- JP-A- 05 338 475
- JP-A- 06 351 110
- JP-A- 09 150 644
- JP-A- 2000 051 276
- JP-A- 2001 046 442
- JP-A- 2006 102 003
- JP-U- 03 016 566

## Description

### TECHNICAL FIELD

The present invention relates to a small-sized electric vehicle, such as an electric wheelchair, that can travel on a sidewalk and is suitable for use by elderly people, etc. and, in particular, to an improvement of a control system for a small-sized electric vehicle that has an operating part of an accelerator lever for controlling the output of an electric motor for driving the vehicle disposed in front of at least one of a pair of left and right grips of handlebars rotatably supported on a steering column disposed in front of a riding seat so that a driver can push down the operating part with a hand that is holding the grip.

### BACKGROUND ART

Such a control system for a small-sized electric vehicle in which a vehicle stopping device is operated by strongly pulling an accelerator lever toward a grip of handlebars when sudden braking is required is already known as disclosed in, for example, Patent Publication 1 below.
Patent Publication 1: Japanese Patent Application Laid-open No. 2000-51276
Another document is JP 2001 046 442 A, which discloses the closest prior art according to the preamble of claim 1.

### DISCLOSURE OF INVENTION

### PROBLEMS TO BE SOLVED BY THE INVENTION

In a conventional small-sized electric vehicle control system, when an accelerator lever is strongly pulled toward the grip side of a handlebar in order to carry out sudden braking, a slide plate supporting the accelerator lever slides against a fixed support member to thus operate a vehicle brake. However, the direction in which the accelerator lever is pulled toward the grip side varies among individual drivers, that is, depending on the physique, the size of the hand, etc. of the driver, there is often a case in which the pulling direction and the sliding direction of the slide plate are misaligned, and in order to guarantee smooth sliding of the slide plate regardless of such misalignment in the direction, it is necessary to regularly carry out maintenance inspections.

The present invention has been accomplished in the light of such circumstances, and it is an object thereof to provide a control system for a small-sized electric vehicle of the above type that, without carrying out special maintenance inspections, can always reliably operate so as to actuate a vehicle stopping device when an accelerator lever is strongly pulled toward a grip side of a handlebar.

### MEANS FOR SOLVING THE PROBLEMS

In order to attain the above object, according to a first aspect of the present invention, there is provided a control system for a small-sized electric vehicle in which an operating part of an accelerator lever for controlling the output of an electric motor for driving the vehicle is disposed in front of at least one of a pair of left and right grips of handlebars rotatably supported in a steering column disposed in front of a riding seat, a return spring urging the accelerator lever in a deceleration direction is connected to the accelerator lever, and a driver can push down the operating part against the urging force of the return spring with a hand that is holding the grip, characterized in that a pivot plate is connected, via a pivot shaft that is substantially parallel to the grip, to a support member integrally joined to the handlebars and disposed in front of the grip so that the pivot plate can pivot between a lower, non-operational position and an upper, braking position with the rear end side as a fulcrum, another return spring is connected to the pivot plate so as to urge the pivot plate toward the non-operational position with a set load that is larger than that of the return spring for the accelerator lever, and a vehicle stopping device is actuated as a result of the pivot plate pivoting toward the braking position side when the operating part of the accelerator lever on the pivot plate is pulled strongly toward the grip side.

According to a second aspect of the present invention, in addition to the first aspect, stopper means is provided between the accelerator lever and the pivot plate, the stopper means regulating a no-load position that is a limit for pivoting of the lever in the deceleration direction and a full load position that is a limit for pivoting of the lever in an acceleration direction, and when the accelerator lever is in the full load position, if the operating part of the lever is pulled strongly toward the grip side, the pivot plate is pivoted toward the braking position side via the stopper means.

According to a third aspect of the present invention, in addition to the first or second aspect, the accelerator lever is provided with a left and right pair of the operating parts corresponding to the left and right grips.

The support member corresponds to a handlebar base plate 110 of an embodiment of the present invention, which will be described later, the stopper means corresponds to a movable stopper member 115 and a fixed stopper member 116, and the stopping device corresponds to a brake switch 135.

### AFFECTS OF THE INVENTION

In accordance with the first aspect of the present invention, since the pivot plate is normally held at the non-operational position by the large set load of the other return spring, the pivot plate is not pivoted by an acceleration operation given by the driver to the operating part of the accelerator lever, but strongly pulling the operating part of the Accelerator lever toward the grip side allows the pivot plate to pivot up around the pivot shaft toward the braking position against the set load of the other return spring, thereby enabling the vehicular stopping device to be actuated. In this arrangement, pivoting of the pivot plate around the pivot shaft is effective in always giving smooth pivoting of the pivot plate regardless of variations among individuals with respect to the direction in which the operating part of the accelerator lever is pulled toward the grip side and, moreover, it is unnecessary to carry out special maintenance inspections in order to guarantee smooth pivoting of the pivot plate.

In accordance with the second aspect of the present invention, when the accelerator lever is at a full load position, strongly pulling the operating part of the lever toward the grip side enables the pivot plate to be pivoted immediately toward the braking position side via the stopper means, and a vehicle emergency stop can be carried out quickly.

In accordance with the third aspect of the present invention, the driver can carry out not only an acceleration operation but also an emergency braking operation with either the left or right hand or with both hands, and the operability is good.

### BRIEF DESCRIPTION OF DRAWINGS

[FIG 1] FIG. 1 is a perspective view of a small-sized electric vehicle related to an embodiment of the present invention.
[FIG. 2] FIG. 2 is a front view of the small-sized electric vehicle.
[FIG.3] FIG 3 is a side view of the small-sized electric vehicle.
[FIG. 4] FIG. 4 is a side view showing a body frame of the small-sized electric vehicle.
[FIG.5] FIG. 5 is a plan view showing the body frame.
[FIG. 6] FIG. 6 is a sectional view along line 6-6 in FIG. 3.
[FIG. 7] FIG. 7 is a sectional view along line 7-7 in FIG. 6.
[FIG. 8] FIG. 8 is a sectional view along line 8-8 in FIG. 3.
[FIG. 9] FIG. 9 is a sectional view along line 9-9 in FIG. 8.
[FIG. 10] FIG. 10 is a plan view showing a handlebar portion (enlarged view from arrow 10 in FIG. 3).
[FIG. 11] FIG. 11 is a view, corresponding to FIG. 10. showing the handlebar portion in a state in which 4 control box is detached.
[FIG. 12] FIG. 12 is an enlarged view showing an essential part of FIG. 11.
[FIG. 13] FIG. 13 is a sectional view along line 13-13 in FIG. 12.
[FIG. 14] FIG. 14 is a sectional view along line 14-14 in FIG. 12.
[FIG. 15] FIG. 15 is a sectional view along line 15-15 in FIG. 12.
[FIG. 16] FIG. 16 is a sectional view along line 16-16 in FIG. 12.
[FIG. 17] FIG. 17 is a sectional view along line 17-17 in FIG. 12.
[FIG. 18] FIG. 18 is a view, corresponding to FIG. 13, showing the operation, at the time of an emergency braking operation.
[FIG. 19] FIG. 19 is an operating load characteristic graph of an accelerator lever.

### EXPLANATION OF REFERENCE NUMERALS AND SYMBOLS

- V: Small-sized electric vehicle
- D: Driver
- H: Driver's hand
- A: Accelerator lever acceleration direction
- R: Accelerator lever deceleration direction
- N: Accelerator lever no-load position
- F: Accelerator lever full load position
- U: Pivot plate non-operational position
- B: Pivot plate braking position
- 3: Handlebars
- 3A: U-shaped portion
- 3B: Connecting portion
- 3e: Free end portion
- 6: Seat
- 28: Steering column
- 53: Electric motor
- 110: Support member (handlebar base plate)
- 112: Pivot plate
- 114: Accelerator lever
- 114a: Shaft portion
- 114b: Operating part
- 115, 116: Stopper means (movable and fixed stopper members)
- 125, 127: Accelerator lever return spring (first and second return springs)
- 131: Pivot shaft
- 132: Pivot plate return spring (third return spring)
- 134: Stopping device (brake switch)

### BEST MODE FOR CARRYING OUT THE INVENTION

A mode for carrying out the present invention is explained below by reference to a preferred embodiment of the present invention shown in the drawings.

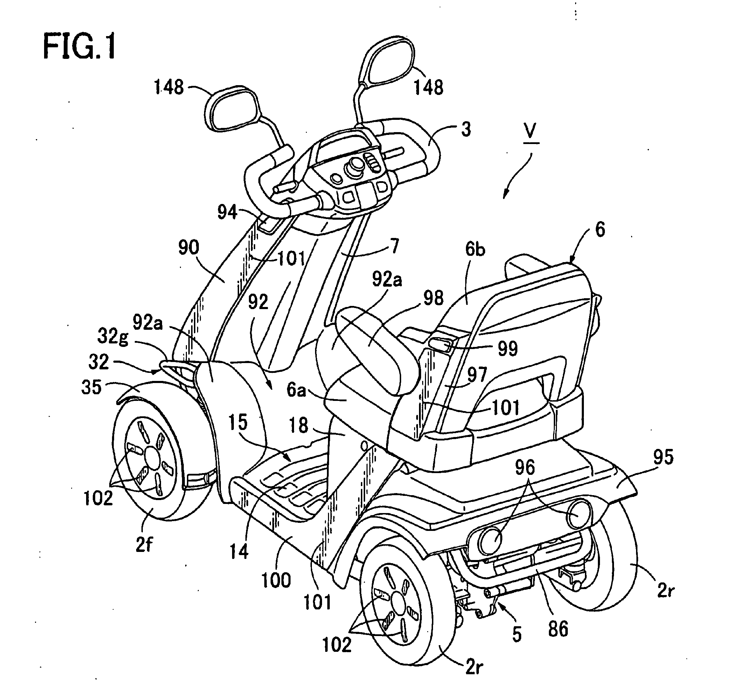

Referring to FIG. 1 to FIG. 5, a small-sized electric vehicle V includes a body frame 1, a pair of left and right front wheels 2f and 2f turnably suspended on a front end part of the body frame 1, handlebars 3, a steering mechanism 4 for transmitting movement of the handlebars 3 to the two front wheels 2f and 2f, a power unit 5 suspended on a rear end part of the body frame 1, a pair of left and right rear wheels 2r and 2r disposed on laterally opposite sides of the power unit 6 and driven by the output thereof, a riding seat 6 supported on the body frame 1 and disposed above the power unit 5, and a vehicle body cover such as a leg shield 7, detailed explanation thereof being given below in sequence. In the explanation below, left and right (lateral) and front and rear (fore-and-aft) are relative to the small-sted electric vehicle V.

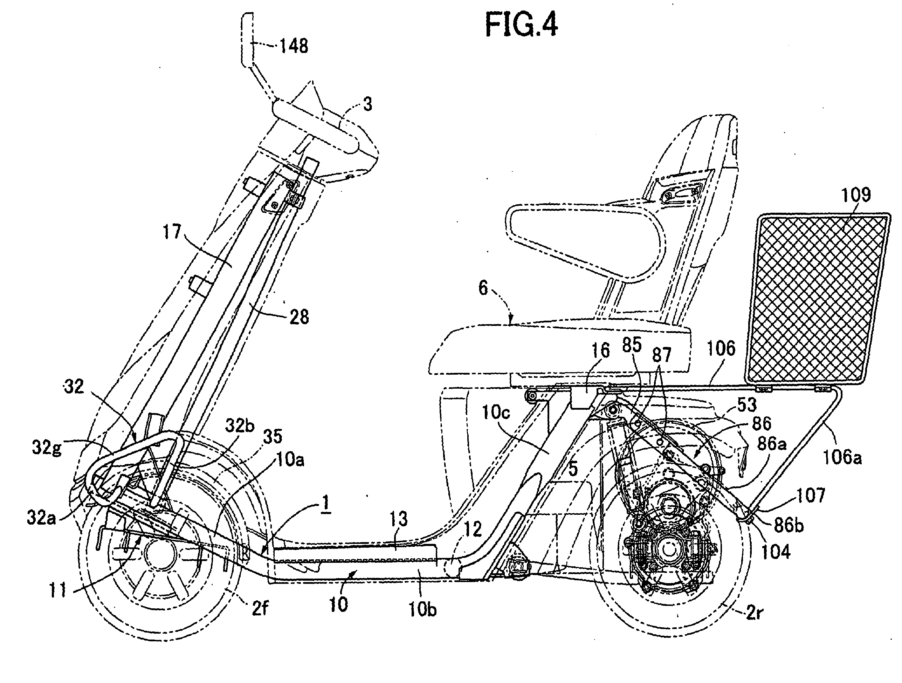

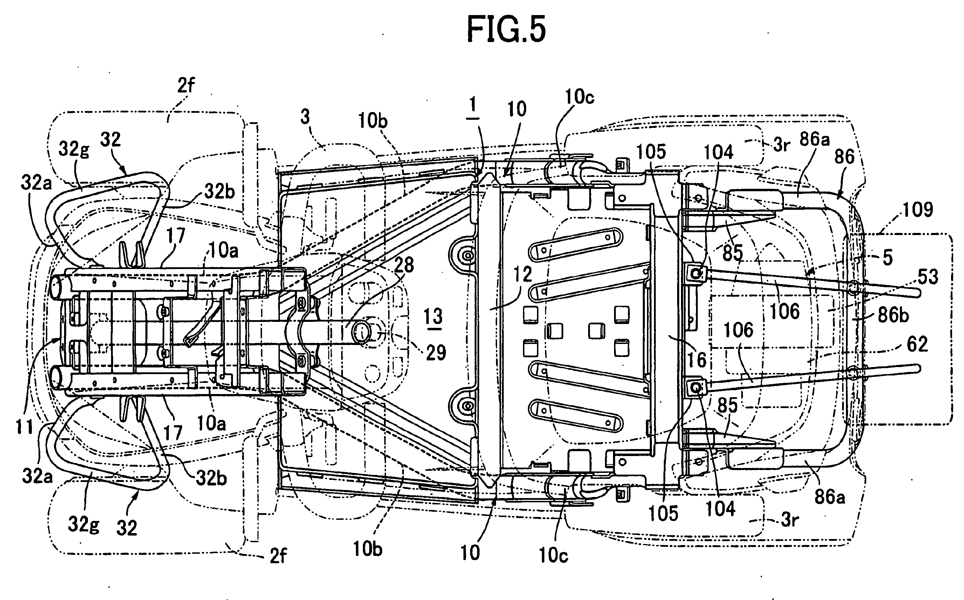

First, the body frame 1 has, as shown in FIG. 4 and FIG. 5, a pair of pipe-shaped main frames 10 and 10 disposed so as to be laterally separated from each other. Each main frame 10 Is formed from a frame front portion 10a extending while being inclined downward from the front end to the rear, a frame middle portion 10b extending horizontally from the rear end of the frame front portion 10a to the rear, and a frame rear portion 10c extending while being inclined upward to the rear from the rear end of the frame middle portion 10b; the frame front portions 10a and 10a of the two main frames 10 and 10 are disposed parallel to each other, the frame middle portions 10b and 10b are disposed so that the gap therebetween widens toward the rear, and the frame rear portions 10c and 10c are disposed parallel to each other. A sub-frame -11; which is made of a steel sheet, is welded to the frame front portions 10a and 10a so as to provide a connection therebetween, a pipe-shaped cross member 12 is welded to the rear ends of the frame middle portions 10b and 10b so as to provide a connection therebetween, and a rectangular floor panel 13 is welded to upper parts of the frame middle portions 10b and 10b so as to provide a connection therebetween. A seat rail 16 is welded to upper ends of the frame rear portions 10c and 10c so as to provide a connection therebetween. Furthermore, lower end parts of a pair of left and right support posts 17 and 17 inclined slightly rearward are welded to front end parts of the frame front portions 10a and 10a. The body frame 1 is arranged as above.

A driver's seat 6 is mounted on the seat rail 16. Furthermore, an auxiliary equipment housing box 18 housing auxiliary equipment such as a battery 19 is mounted from the front side between the frame rear portions 10c and 10c.

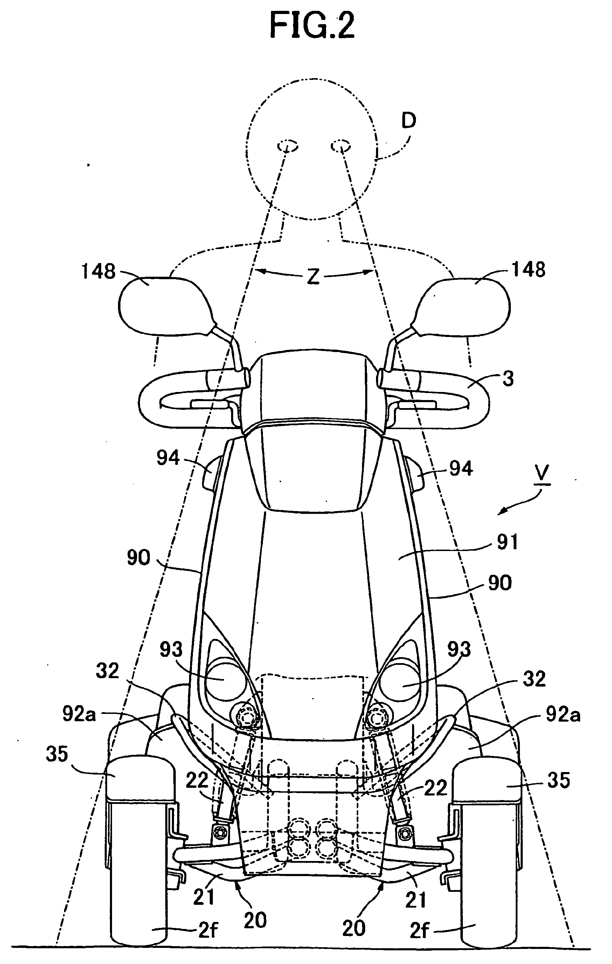

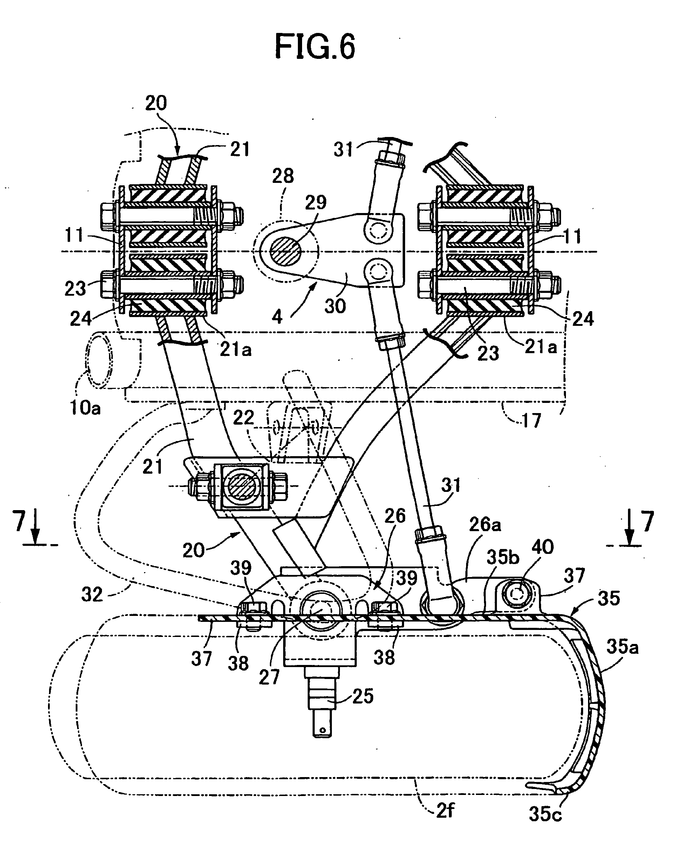

As shown in FIG. 2, FIG. 3, and FIG. 6, the left and right front wheels 2f and 2f are independently suspended on the sub-frame 11 via front suspension systems 20 and 20 respectively. Each front suspension system 20 includes an A-shaped front suspension arm 21 having its inner end side bifurcated into front and rear parts and a telescopic front damper 22. A pair of front and rear boss portions 21 a and 21 a at the inner end of the front suspension arm 21 are supported via resilient bushes 24 and 24 on a pair of front and rear pivot shafts 23 and 23 fixedly provided on the sub-frame 11 and extending in the fore-and-aft direction so that the front suspension arm 21 can swing vertically around the pivot shafts 23 and 23, and the front damper 22 for cushioning vertical swinging of the front suspension arm 21 is connected between each front suspension arm 21 and the support post 17 on the same side.

Connected turnably via a kingpin 27 to the outer end of the front suspension arm 21, that is, the swinging end, is a knuckle 26 having an axle 25 rotatably supporting the front wheel 2f on the same side.

A steering column 28 supported by the sub-frame 11 and the left and right support posts 17 and 17 is disposed in a middle section between the two support posts 17 and 17, and the handlebars 3, which are disposed above the steering column 28, are operatively connected to the left and right knuckles 26 and 26 via the steering mechanism 4.

The steering mechanism 4 is formed from a steering shaft 29 rotatably supported in the steering column 28 and having its upper end part connected to the handlebars 3, a steering arm 30 formed integrally with a lower end part of the steering shaft 29 and extending to the rear of the shaft 29, and a pair of left and right tie rods 31 and 31 providing a connection between the steering arm 30 and knuckle arms 26a and 26a of the left and right knuckles 26 and 26. The knuckle arm 26a extends from a lower end part of the knuckle 26 further rearward than the kingpin 27, pivots around the kingpin 27 in response to steering of the handlebars 3, and makes the left and right front wheels 2f and 2f turn.

As shown in FIG 1, FIG. 2, FIG. 6, and FIG. 7, a movable fender 35 covering substantially half of a peripheral face of an upper part of the front wheel 2f is disposed above each front wheel 2f, and this movable fender 35 is mounted on the corresponding knuckle 26 as follows, so that it can be turned integrally with the corresponding front wheel 2f. That is, the movable fender 35 is made of a synthetic resin, and is formed by integrally connecting an arc-shaped peripheral wall portion 35a covering an upper part of the outer peripheral face of the front wheel 2f, an inside wall portion 35b covering an upper part of the inside face of the front wheel 2f, and an outside wall portion 35c covering the edge of an upper part of the outside face of the front wheel 2f; a vertical first mounting portion 36 is formed in a middle section of the inside wall portion 35b, and a horizontal second mounting portion 37 is formed in a rear end section thereof. A pair of front and rear brackets 38 and 38 are formed on the knuckle 26 so as to rise from the upper end thereof, the first mounting portion 36 is secured to these brackets 38 and 38 via bolts 39 and 39, and the second mounting portion 37 is secured to the knuckle arm 26a via a bolt 40. Removing the bolts 39 and 40 enables the movable fender 35 to be detached from the knuckle 26.

With regard to the left and right movable fenders 35 and 35, at least front end parts thereof are disposed so as to be within a field of vision Z of a driver D seated on the seat 6 (see FIG. 2).

The driver D can therefore accurately check the position and direction of the front wheels 2f and 2f on the road by viewing the movable fenders 35 and 35, which turn together with the left and right front wheels 2f and 2f, while driving the small-sized electric vehicle V, and thereby can easily carry out steering on a bad road or a tight bend.

Moreover, in the case of the movable fenders 35 and 35 a relatively small area suffices for covering just the area immediately above the front wheels 2f and 2f, and compared with one that is formed so as to cover a wide area of a turning front wheel, such as a fixed front fender of a conventional small-sized electric vehicle, which is integral with a vehicle body, it can contribute to a reduction in the width of the vehicle body, and avoid intimidating a pedestrian while traveling on a sidewalk.

Furthermore, mounting of each movable fender 35 can be carried out simply by bolting the first and second mounting portions 37 of the inside wall portion 35b to the brackets 38 and 38 and knuckle arm 26a of the knuckle 26, which axially supports the front wheel 2f, and the movable fenders 35 and 35 can reliably be turned simultaneously with the front wheels 2f and 2f.

Moreover, since each movable fender 35 can be independently detached from the knuckle 26, if it is damaged, only the movable fender 35 needs to be replaced with a new component irrespective of other members, thus reducing the cost of maintenance.

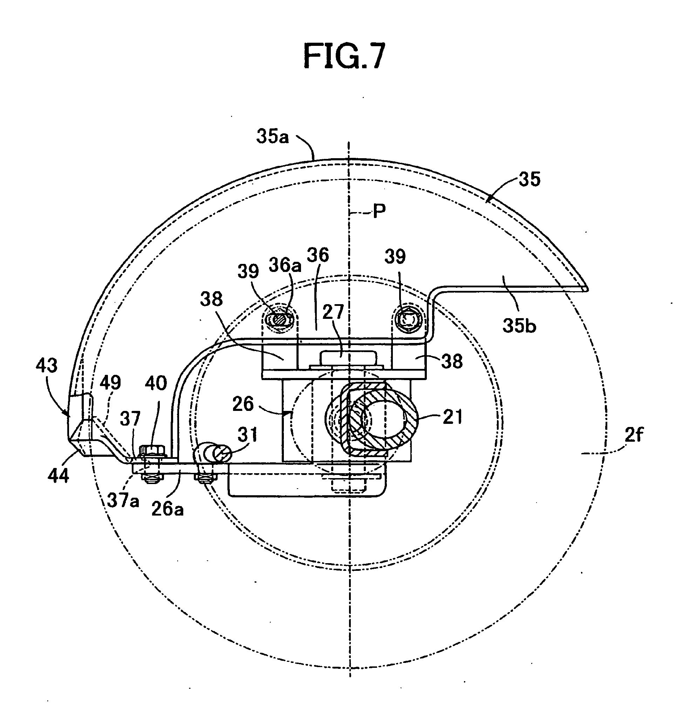

The structure for mounting the movable fender 35 on the knuckle 26 is explained in further detail. A pair of front and rear first mounting holes 36a and 36a are provided in the vertical first mounting portion 36 formed on the inside wall portion 35b of the movable fender 35 and disposed so as to sandwich a vertical plane P (see FIG 7) containing the axis of rotation of the front wheel 2f, and a second mounting hole 37a is provided in the horizontal second mounting portion 37, which is formed on a lower end part of the inside wall portion 35b.

In this way, since the first mounting portion 36 of the movable fender 35 is supported on the knuckle 26 at two positions in the fore-and-aft direction arranged so as to sandwich the vertical plane P containing the axis of rotation of the front wheel 2f, together with support via the second mounting portion 37, the entire movable fender 35 can be supported securely on the knuckle 26. Moreover, since the first and second mounting portions 36a and 37a form right angles to each other, the rigidity with which the movable fender 35 is supported is high, thus contributing to stabilization of the mounting attitude of the movable fender 35 and prevention of vibration.

In FIG 1 and FIG 4 to FIG 6, a pair of left and right guard members 32 and 32 are disposed on left and right sides of a front part of the body frame 1 so as to protrude to above the front wheels 2f and 2f on the same side while surrounding the front damper 22 on the same side. Each guard member 32 is formed by bending a pipe material in a loop shape, is formed in a loop shape from a linear grip portion 32g extending in the fore-and-aft direction and a pair of front and rear leg portions 32a and 32b extending from opposite ends of the grip portion 32g while bending downward, and is supported on the body frame 1 by securing the leg portion 32b on the rear side to an outside face of the frame front portion 10a of the main frame 10 and securing the leg portion 32a on the front side to an outside face of the support post 17 on the same side via a bolt, etc. The two leg portions 32a and 32b are disposed so that their outer ends are inclined upward while passing front and rear opposite sides of the front damper 22 and passing between the front wheel 2f and a front cover 91, a front side cover 90, and the leg shield 7, and the grip portion 32g occupies a position above the front wheel 2f and the movable fender 35.

The left and right guard members 32 and 32 can prevent an obstruction such as a dropped object from entering between the front cover 91 and the front wheels 2f and 2f, and protect the movable fender 35, the front wheel 2f, the front damper 22, etc. from the obstruction.

Since the grip portion 32g of each guard member 32 is exposed above the movable fender 35, when an assistant lifts a front part of the small-sized electric vehicle V, the grip portion 32g can easily be held without being obstructed by the front cover 91, etc., and the lifting operability is improved. Furthermore, since the grip portion 32g is disposed above the movable fender 35, muddy water scattered by the front wheel 2f is caught by the movable fender 35, thus preventing the grip portion 32g from becoming dirty due to muddy water and, therefore, the assistant's hands do not become dirty. In this way, the burden imposed on the assistant when lifting the front part of the small-sized electric vehicle V can be alleviated.

Moreover, since the two leg portions 32a and 32b of the guard member 32 are secured to the body frame 1, the strength with which the guard member 32 is supported is high, and it can sufficiently withstand the lifting load.

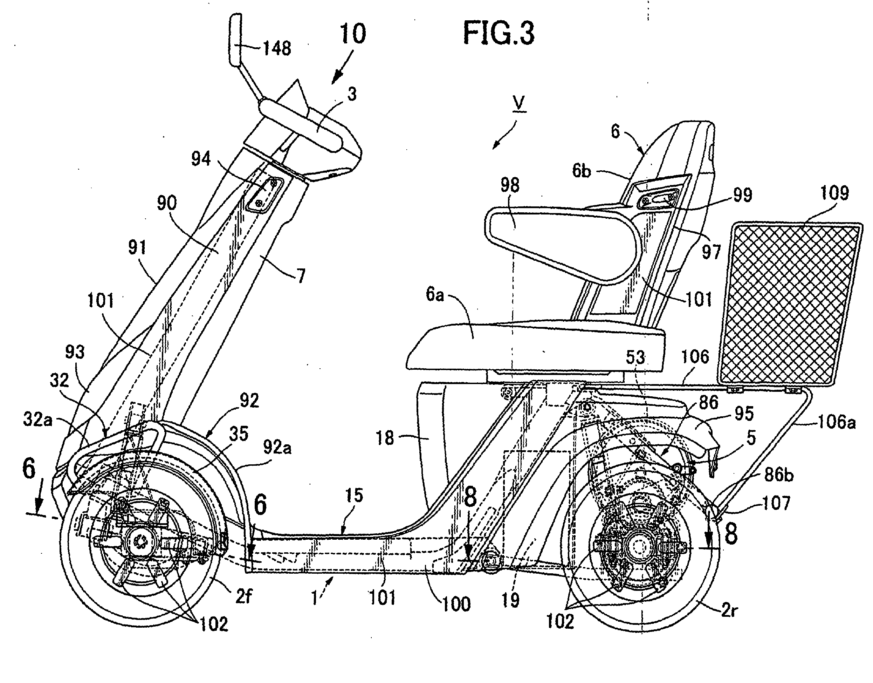

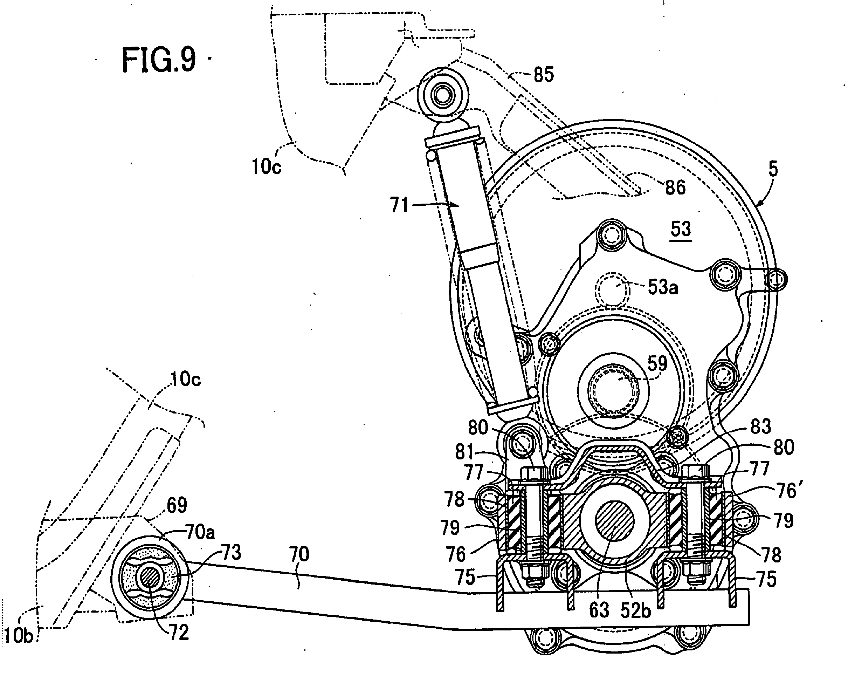

In FIG. 3, FIG. 8, and FIG. 9, the power unit 5 is suspended on a rear part of the main frame 10 via a rear suspension system 51, and the pair of left and right rear wheels 2r and 2r are supported on the power unit 5. A casing 52 of the power unit 5 is formed from a reduction case 52a and a pair of left and right axle cases 52b and 52b projectingly provided integrally with left and right opposite side walls of a lower part of the reduction case 52a, an electric motor 53, which uses the battery 19 as a power source, is mounted on one side of an upper part of the reduction case 52a, and an output shaft 53a of the electric motor 53 is disposed so that a pinion gear 54 formed on a forward end part thereof projects into the reduction case 52a.

Within the reduction case 52a, a differential case 56 of a differential 55 is disposed coaxially with the left and right axle cases 52b and 52b, and left and right opposite end parts of the differential case 56 are rotatably supported on the reduction case 52a via ball bearings 57 and 57. A large-diameter final gear 58 is spline-coupled to the differential case 56. Within the reduction case 52a, an intermediate transmission shaft 59 is disposed in a middle section between the output shaft 53a and the axle cases 52b and 52b, and left and right opposite end parts of the intermediate transmission shaft 59 are rotatably supported on the reduction case 52a. A large-diameter gear 60 meshing with the pinion gear 54 and a small-diameter gear 61 meshing with the final gear 58 are fixedly provided on the intermediate transmission shaft 59. The pinion gear 54, the large-diameter gear 60, the small-diameter gear 61, and the final gear 58 form a reduction gear 62 for transmitting rotation of the output shaft 53a of the electric motor 53 to the differential case 56 with a fixed reduction ratio, and the electric motor 53 is disposed above the reduction gear 62.

Left and right rear axles 63 and 63 running through the left and right axle cases 52b and 52b are each relatively rotatably supported by the inner peripheral face of opposite end parts of the differential case 56, and side gears 64 and 64 are respectively spline-coupted to inner end parts, of the rear axles 63 and 63, projecting into the differential case 56. A pinion shaft 65, which is perpendicular to the axis of rotation of the differential case 56, is mounted thereon, and a pair of pinion gears 66 and 66, which mesh with the two side gears 64 and 64, are rotatably supported on the pinion shaft 65. The differential case 56, the pinion gears 66 and 66, and the side gears 64 and 64 form the differential 55 for distributing rotation of the final gear 58 between the left and right rear axles 63 and 63.

The left and right rear axles 63 and 63 are supported on outer end parts of the left and right axle cases 52b and 52b via ball bearings 67 and 67. The left and right rear wheels 2r and 2r are mounted integrally onto forward end parts of the left and right rear axles 63 and 63 projecting from the outer ends of the left and right axle cases 52b and 52b. The rear wheels 2r and 2r are therefore supported on the axle cases 52b and 52b via the rear axles 63 and 63.

The rear suspension system 51 is formed from a pair of left and right rear suspension arms 70 and 70 and a pair of left and right telescopic rear dampers 71 and 71. Each rear suspension arm 70 has a boss portion 70a at its front end supported via a front resilient bush 73 on a pivot shaft 72 that is secured to a bracket 69 in a rear end part of the frame middle portion 10b and extends laterally, so that the rear suspension arm 70 can swing vertically around the pivot shaft 72.

A pair of front and back support platforms 75 and 75 are fixed by welding to a rear end part of each rear suspension arm 70, and a pair of front and rear support arms 76 and 76' disposed above the support platforms 75 and 75 are projectingly provided integrally with front and rear opposite faces of the axle case 52b on the same side. Rear resilient bushes 77 and 77 having their axes directed vertically are provided on the support arms 76 and 76' as follows.

That is, an outer tube 78 and an inner tube 79, which are coaxial with each other, are fused to inner and outer peripheries of each rear resilient bush 77, and the outer tubes 78 and 78 of the front and back rear resilient bushes 77 and 77 are press-fitted into the support arms 76 and 76'. The inner tubes 79 and 79 of the front and back rear resilient bushes 77 and 77 are held and fixed between the support platforms 75 and 75 and a retaining plate 83 via bolts 80 and 80 running through the inner tubes 79 and 79.

In the arrangement above, each front resilient bush 73 is formed so that the modulus of elasticity in the vertical direction is smaller than the modulus of elasticity in the fore-and-aft direction. Each rear resilient bush 77 is formed so that the modulus of elasticity in the lateral direction is smaller than the modulus of elasticity in the fore-and-aft direction.

An upwardly rising bracket 81 is secured to each support arm 76 on the front side, and opposite end parts of the rear damper 71 are connected to the bracket 81 and an upper end part of the frame rear portion 10c.

When the rear wheels 2r and 2r are driven by output from the power unit 5, a reaction torque acting on the casing 52 is transmitted from the support arms 76 and 76' of the axle case 52b to the rear suspension arm 70 via the pair of front and back rear resilient bushes 77 and 77, the bolts 80 and 80, and the support platforms 75 and 75, and is received by the rear suspension arm 70. In this process, due to resilient deformation of the front and back rear resilient bushes 77 and 77, the impact of the reaction torque is appropriately alleviated; since the rear resilient bushes 77 and 77 are disposed in the fore-and-aft direction with the rear axle 63 interposed therebetween, a sufficient resistance force can be exhibited against the reaction torque, and by setting the modulus of elasticity in the fore-and-aft direction of these rear resilient bushes 77 at a relatively large value, the rigidity with which the power unit 5 is supported can be enhanced. It is therefore possible to suppress excessive swinging of the overall power unit 5 due to the reaction torque and to appropriately transmit power to the rear wheels 2r and 2r.

Furthermore, the pair of rear dampers 71 and 71 connected to the left and right support arms 76 and 76 on the front side of the axle cases 52b and 52b also function so as to oppose the reaction torque of the power unit 5, thus contributing to strengthening of the rigidity with which the power unit 5 is supported.

While the small-sized electric vehicle V is traveling, when different impacts are applied to the left and right rear wheels 2r and 2r from the road surface, due to resilient deformation of the front resilient bush 73 and the rear resilient bushes 77 and 77, the axle cases 52b and 52b are relatively easily tilted so that the side on which the impact from the road surface is higher is directed upward and, in response thereto, vertically swinging the left and right rear suspension arms 70 and 70 relative to each other enables the left and right rear wheels 2r and 2r to be individually raised up and down, thereby enhancing the road holding of each rear wheel 2r and contributing to an improvement in the ride comfort. In particular, setting the modulus of elasticity in the lateral direction of each rear resilient bush 77 so as to be relatively small is effective in promoting swinging of the left and right rear suspension arms 70 and 70 relative to each other and further improving the road holding of each rear wheel 2r.

Moreover, when cornering, if the rear wheels 2r and 2r receive a lateral load, a sufficient resistance force can be exhibited by cooperation between the front and back pairs of left and right rear resilient bushes 77 and 77: 77 and 77, and it is therefore possible to enhance the rigidity with which the rear wheels 2r and 2r are supported in the lateral direction and to stabilize the attitude of the rear wheels 2r and 2r.

Such a rear suspension system 51 has a simple structure and is easy to assemble, and it can be provided at low cost.

In FIG. 1 and FIG. 3 to FIG. 5, a pair of left and right fourth brackets 85 and 85 projecting obliquely downward are welded to the body frame 1 directly below the seat 6, that is, the upper end part of the frame rear portion 10c, and opposite end parts of a U-shaped rear bumper 86 are detachably secured to these fourth brackets 85 and 85 via bolts 87 so as to surround the electric motor 53 of the power unit 5. That is, the rear bumper 86 is formed from a pair of left and right side face guard portions 86a and 86a extending obliquely rearward from the fourth brackets 85 and 85 so as to face left and right side faces of the electric motor 53, and a rear face guard portion 86b providing integral connection between rear end parts of these side face guard portions 86a and 86a and facing a rear face of the electric motor 53.

In this way, the rear bumper 86 is secured to the body frame 1 independently of the suspension of the rear wheels 2r and 2r, and therefore if the rear bumper 86 is deformed as a result of collision with an obstruction, it is possible to prevent the alignment of the rear wheels 2r and 2r from being disturbed. Moreover, the rear bumper 86 can protect the electric motor 53 from an obstruction approaching from the left or right side or the rear thereof by means of the pair of left and right side face guard portions 86a and 86a and the rear face guard portion 86b.

Furthermore, with regard to the rear bumper 86, its rear face guard portion 86b can be used as a grip for lifting up the vehicle body, and the ease of lifting up the vehicle body rear part by an assistant is good; moreover, when the small-sized electric vehicle V is loaded on a carrier vehicle, the rear face guard portion 86b can be used as a latching part for a retaining tool for retaining the small-sized electric vehicle V on a load-carrying tray, and the convenience is high.

Moreover, maintenance of the power unit 5 can easily be carried out by detaching the rear bumper 86 from the body frame 1.

In FIG. 3 to FIG. 5, a pair of left and right fifth brackets 105 and 105 projecting rearward are welded to a middle section of the seat rail 16 that provides a connection between the upper end parts of the frame rear portions 10c and 10c, and left and right carrier members 106 and 106 extending substantially horizontally above the power unit 5 up to the rear of the rear wheels 2r and 2r are detachably secured to the fifth brackets 105 and 105 by means of bolts 104 and 104. These carrier members 106 and 106 integrally include support legs 106a and 106a bending from the rear end thereof downward to the front at an acute angle, and a mounting piece 107 welded to a lower end part of each support leg 106a is detachably secured to a middle section of the rear face guard portion 86b of the rear bumper 86 by means of a bolt 108 running through the mounting piece 107. The left and right carrier members 106 and 106 are used by, for example, mounting a carrier basket 109 on upper faces thereof. In this case, the carrier basket 109 provides a connection between the left and right carrier members 106 and 106, thus functioning as a reinforcing member therefor.

In this way, the carrier members 106 and 106 can be provided by utilizing a space above the power unit 5 and, furthermore, the carrier members 106 and 106 can be supported firmly on the rear bumper 86 via the support legs 106a and 106a.

Referring again to FIG 1 to FIG. 3, detachably secured to the left and right support posts 17 and 17 via bolts (not illustrated) are the front side covers 90 and 90, which cover left and right opposite sides of these support posts, the front cover 91, which covers front faces of the support posts 17 and 17 and the steering column 28 and provides a connection between the two front side covers 90 and 90, and the leg shield 7, which covers rear faces of the support posts 17 and 17 and the steering column 28 and provides a connection between the two front side covers 90 and 90. In this way, the leg shield 7 is disposed so as to project laterally outward from the steering column 28 and cover from the front both legs of the driver D seated on the seat 6. The width of the leg shield 7 is set as for the floor panel 13 so that the width is less than the distance between inner edges of the left and right movable fenders 35 and 35 so as not to intimidate a pedestrian walking past on a sidewalk, an auxiliary cover 92 is provided integrally so as to be connected to the lower end of the leg shield 7, the auxiliary cover 92 having a broader width than that of the leg shield 7, covering rear parts of the left and right movable fenders 35 and 35 and a section therebetween, and being inclined downward to the rear, and the rear end of the auxiliary cover 92 is joined by bolting to the floor panel 13. Opposite end parts 92a and 92a of the auxiliary cover 92 covering the rear parts of the left and right movable fender 35 are formed in an arc shape that protrudes outward in the radial direction of the movable fender 35 and extends along the outer peripheral face of the movable fender 35. A floor mat 14 is laid down on a top face of the floor panel 13 so as to cover joins in the auxiliary cover 92. The floor panel 13 and the floor mat 14 form a footrest for the driver D, that is, a step floor 15.

Since the auxiliary cover 92 has a broader width than that of the leg shield 7 so as to cover the rear parts of the left and right movable fenders 35 and 35 and a section therebetween and extends between the leg shield 7 and the step floor 15, muddy water, etc. leaking past the movable fenders 35 and 35 and splashing rearward can be caught by the auxiliary cover 92.

Moreover, since the auxiliary cover 92 is provided so as to be connected to the lower part of the leg shield 7, even if the width thereof is broader than that of the leg shield 7, a pedestrian is not intimidated.

Furthermore, since the opposite end parts 92a and 92a of the auxiliary cover 92, which cover the rear parts of the left and right movable fenders 35, are formed in an arc shape that protrudes outward in the radial direction of the movable fenders 35 and extends along the outer peripheral face of the movable fenders 35, it is possible to ensure that there is a sufficient gap between the movable fenders 35 and 35 and the auxiliary cover 92, thus avoiding interference between the movable fenders 35 and 35 and the auxiliary cover 92 when turning the front wheels 2f and 2f.

Moreover, since the auxiliary cover 92 is disposed between the leg shield 7 and the step floor 15, its width is broader than that of the leg shield 7, and it is inclined downward to the rear, this auxiliary cover 92 can also be used as an auxiliary step for the feet of the driver D to be put on in an extended state, thus contributing to an improvement in comfort.

A pair of left and right headlights 93 and 93 are mounted on a lower part of the front cover 91, and front front direction indicators 94 and 94 are mounted on upper parts of the left and right front side covers 90 and 90. Furthermore, a rear cover 95 covering the power unit 5 and the left and right rear wheels 2r and 2r is secured to a rear part of the main frame 10, and tail lights 96 are mounted on a rear face of the rear cover 95.

The driver's seat 6 is formed from a seat cushion 6a supported on the seat rail 16 and a seat back 6b rising from a rear end part of the seat cushion 6a. The seat back 6b integrally includes support plates 97 and 97 on left and right opposite side faces, and a pair of left and right arm rests 98 and 98 are axially supported on the support plates 97 and 97 so that they can pivot between a horizontal working position and an upright retracted position. Reant direction indicators 95 and 95 are mounted on upper parts of the support plates 97 and 97 above these arm rests 98 and 98.

Furthermore, as clearly shown in FIG. 1 and FIG. 3, an L-shaped rear side cover 100 is mounted on the frame middle portion 10b and the frame rear portion 10c of the main frame 10 so as to cover them. The rear side cover 100, the front side cover 90, and the support plate 97 are representative of flat side faces of the vehicle body of the small-sized electric vehicle V, and a reflector 101 or a luminous body is attached over substantially the whole region of outer faces thereof. The reflector 101 suitably employs a metallic coating, a nearly neutral gray coating, a mirror, etc.; when a metallic coating, in particular a silver metallic coating, is employed, the reflector 101 can simply be formed by coating and, moreover, since the reflectance for illuminating light is relatively high, visibility is good.

Furthermore, the luminous body suitably employs a light-storing material or a fluorescent material, and when this is employed, since it actively emits light upon reception of illuminating light such as from the headlights of another vehicle, etc., the visibility is therefore high.

Moreover, a reflector 102 or a luminous body of the same type as above is attached to outside faces of the front wheels 2f and 2f and the rear wheels 2r and 2r.

While the small-sized electric vehicle V is crossing a roadway at night, when the side face of the vehicle body is illuminated by the headlights of another vehicle, due to light reflected from the reflectors 101 and 102 or light emitted by the luminous body, the rear side cover 100, the front side cover 90, the support plate 97, the front wheel 2f, and the rear wheel 2r stand out, thus making it easy for the driver of the other vehicle to recognize substantially the entire small-sized electric vehicle V and thereby enabling good side visibility of the small-sized electric vehicle V at night to be obtained.

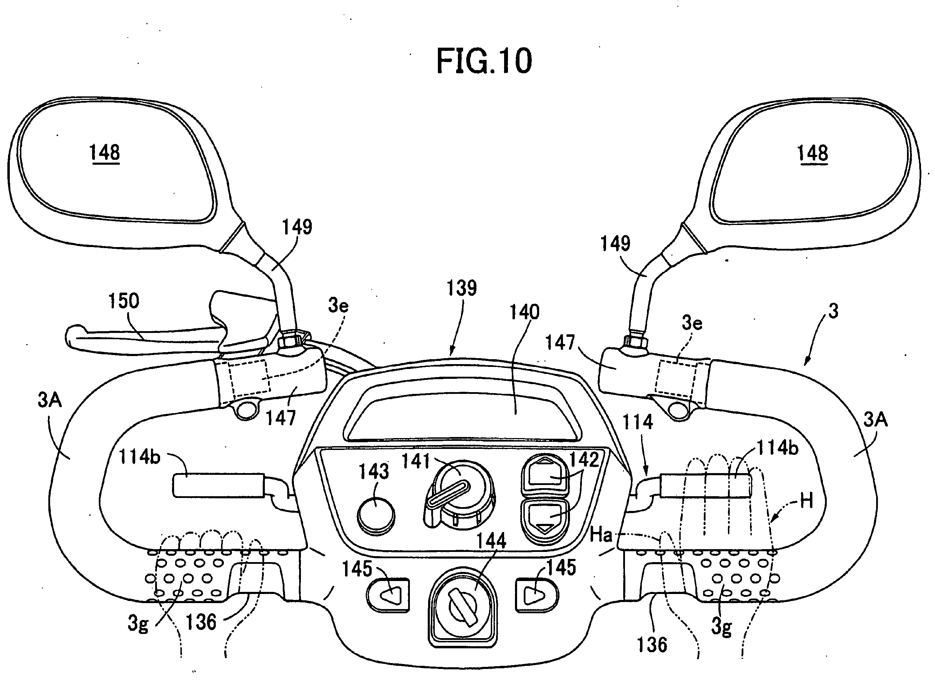

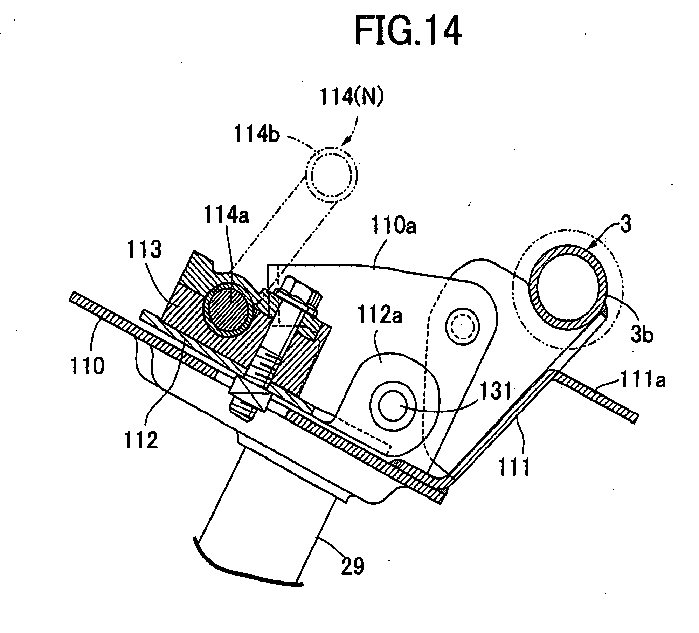

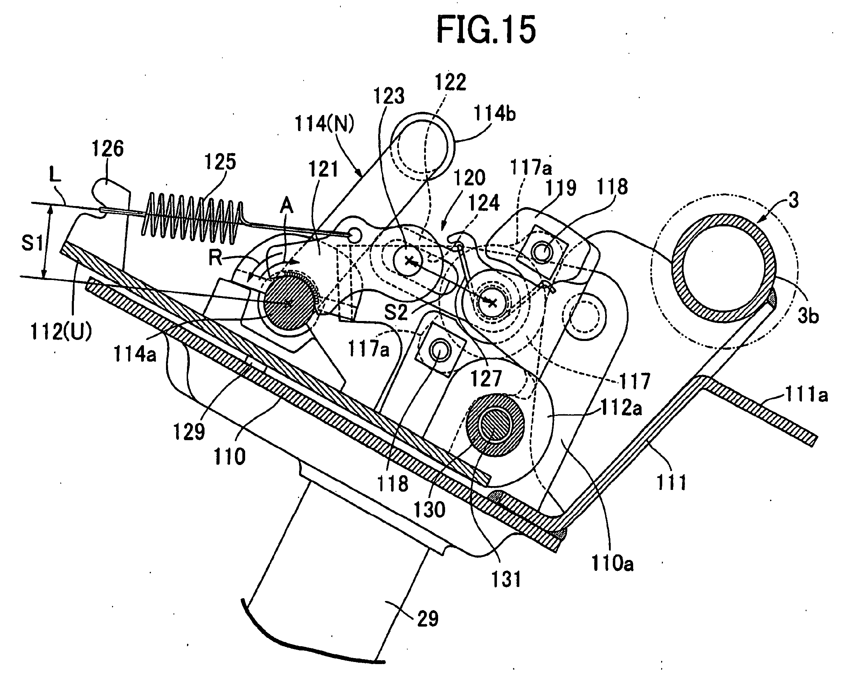

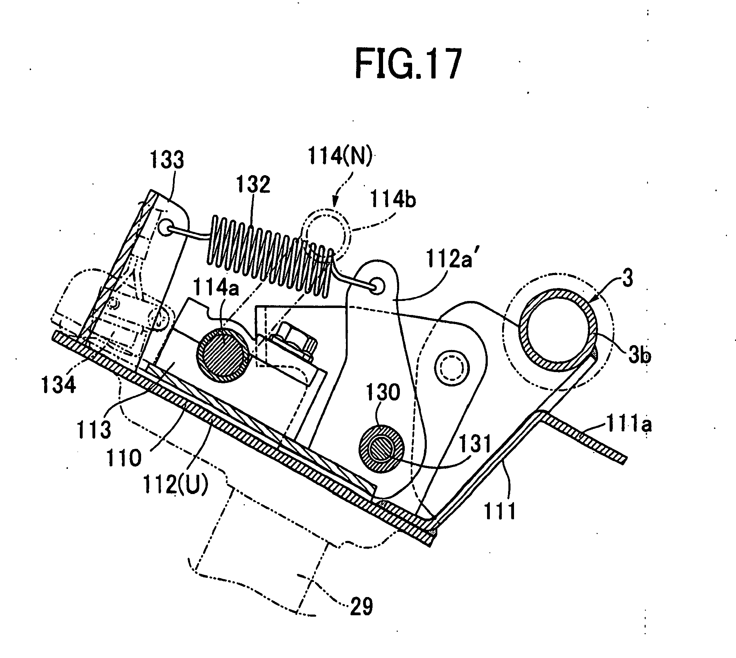

A control system, including the handlebars 3, for this small-sized electric vehicle V is now explained by reference to FIG. 10 to FIG. 18.

In FIG. 10 to FIG. 13, a handlebar base plate 110 is secured to the upper end of the steering shaft 29, and the handlebars 3 are secured by welding, etc. to a stay 111 uprightly provided on a rear end part of the handlebar base plate 110.

The handlebars 3 are formed by bending a pipe material into a loop shape, and include a pair of left and right U-shaped portions 3A and 3A having each bent portion facing outward, and a connecting portion 3B that provides integral connection between parts at one end of the U-shaped portions 3A and 3A and that is secured to the stay 111, and the other end parts of the left and right U-shaped portions 3A and 3A are free end portions 3e and 3e spaced from each other and facing each other. These handlebars 3 are disposed so that the free end portions 3e and 3e face the front of the vehicle and the connecting portion 3B faces the rear of the vehicle, and a pair of left and right grips 3g and 3g for the driver D to grip are formed in a straight section on the connecting portion 3B side of the left and right U-shaped portions 3A and 3A. The gap between the left and right free end portions 3e and 3e is set so as to be substantially the same as the gap between inner ends of the left and right grips 3g and 3g.

Furthermore, a pivot plate 112 is disposed on the handlebar base plate 110. The relationship between the pivot plate 112 and the handlebar base plate 110 will be described later.

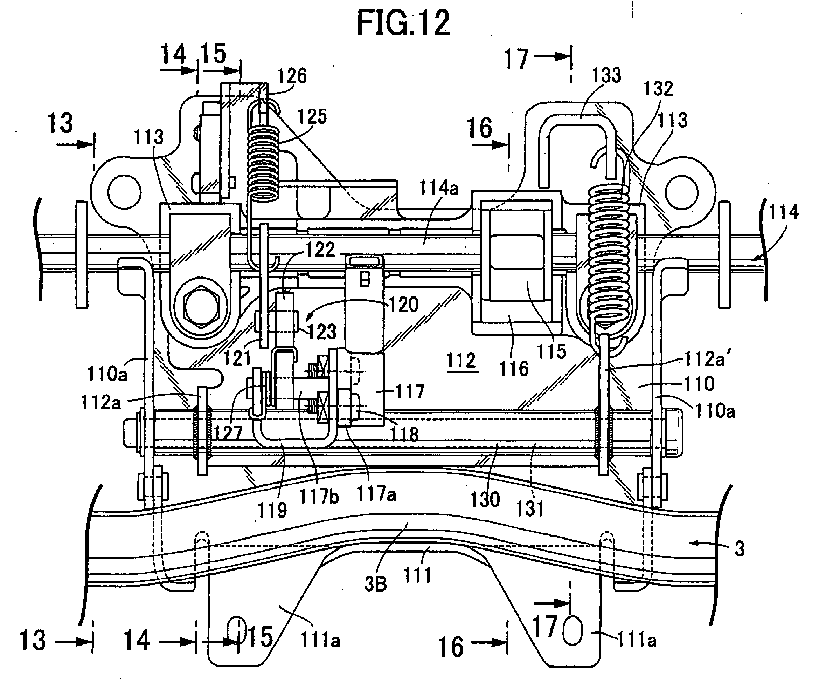

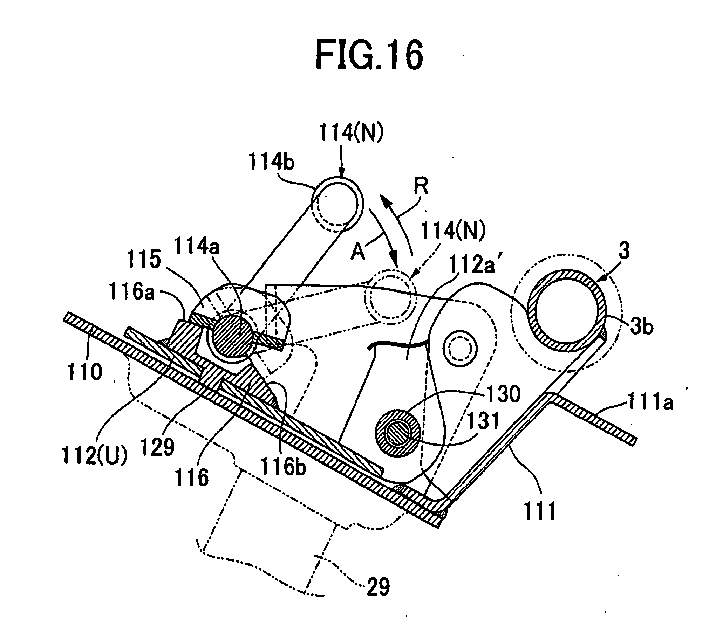

As shown in FIG. 12 to FIG. 17, a pair of left and right bearing stands 113 and 113 are secured to the pivot plate 112, and a shaft portion 114a of an accelerator lever 114 is supported by these bearing stands 113 and 113 so as to be rotatable and be parallel to the grips 3g and 3g. The accelerator lever 114 is formed by connecting in a crank shape operating parts 114b and 114b to opposite end parts of the shaft portion 114a projecting outside the bearing stands 113 and 113, and the operating parts 114b and 114b are pushed down toward the grips 3g and 3g by a finger of a hand H of the driver D holding the grips 3g and 3g. When the operating parts 114b and 114b are pushed down the shaft portion 114a is rotated in an acceleration direction A, and releasing the pushing-up force allows the shaft portion 114a to rotate in a deceleration direction R. As clearly shown in FIG. 16, a movable stopper member 115 is secured to a middle section of the shaft portion 114a so as to project in a radial direction thereof, and a fixed stopper member 116 corresponding to the movable stopper member 115 is secured to the pivot plate 112; abutment of the movable stopper member 115 against a first stopper face 116a of the fixed stopper member 116 regulates the rotational limit of the shaft portion 114a in the deceleration direction R, that is, a no-load position N of the accelerator lever 114, and abutment of the movable stopper member 115 against a second stopper face 116b of the fixed stopper member 116 regulates the rotational limit of the shaft portion 114a in the acceleration direction A, that is, a full load position F of the accelerator lever 114.

A pair of mounting flanges 117a and 117a of an accelerator sensor 117 for detecting a rotational angle of the shaft portion 114a in the acceleration direction A are fixed by screws 118 and 118 to a support post 119 uprightly provided on an upper face of the pivot plate 112. The accelerator sensor 117 is formed from, for example, a potentiometer. The accelerator lever 114 is linked to an input shaft 117b of the accelerator sensor 117 via a linkage 120.

This linkage 120 is formed from a drive arm 121 secured to a middle section of the shaft portion 114a of the accelerator lever 114 and extending in a radial direction thereof, and a follower arm 122 secured to the input shaft 117b of the accelerator sensor 117 and extending in a radial direction thereof, a linking pin 123 projectingly provided on a side face of the extremity of the drive arm 121 slidably engages with a long hole 124 formed in the follower arm 122, and rotation given to the drive arm 121 by the shaft portion can be transmitted, via the linking pin 123, to the follower arm 122 and then to the input shaft 117b. A first return spring 125 formed from a tension coil spring and urging the shaft portion 114a toward the deceleration direction R by a predetermined set load is provided in a contracted state between the drive arm 121 and a spring latching part 126 provided on the pivot plate 112.

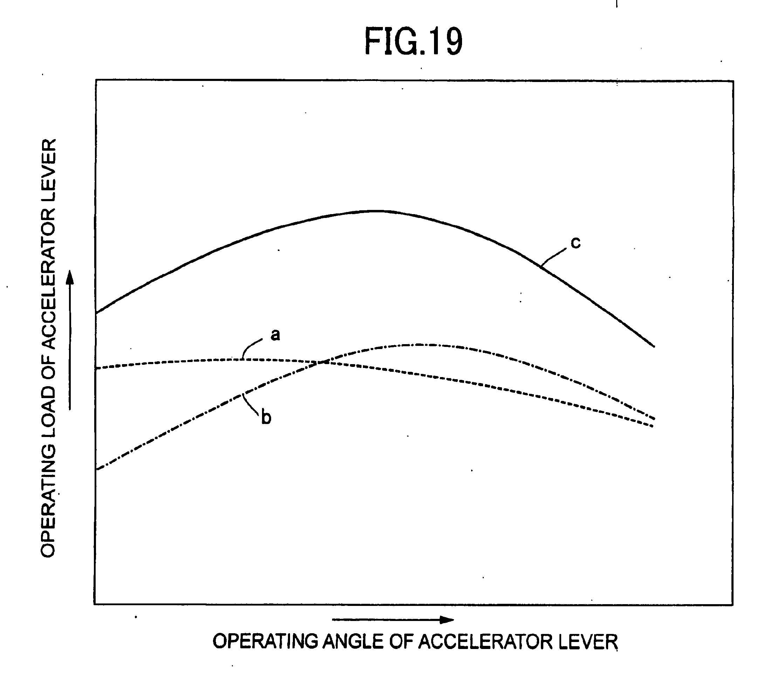

The drive arm 121 and the first return spring 125 are arranged so that a distance S1 between a tensile force line of action L of the spring 125 and the pivot center of the drive arm 121 is shortened in response to the drive arm 121 pivoting in the acceleration direction A. Therefore, when the accelerator lever 114 is pivoted from the no-load position N in the acceleration direction A, the spring force of the first return spring 125 increases, but the return moment the spring force gives to the drive arm 121 decreases (see line a in FIG. 19).

Furthermore, the input shaft 117b is equipped with a second return spring 127 formed from a torsion coil spring and urging the follower arm 122 to pivot; the direction of action of the spring force of the second return spring 127 with respect to the follower arm 122 is the same as the direction in which the spring force of the first return spring 125 acts on the follower arm 122 via the linking pin 123.

The drive arm 121 and the follower arm 122 are arranged so that a distance S2 between the center of the linking pin 123 of the drive arm 121 and the pivot center of the follower arm 122 gradually decreases as the drive arm 121 pivots from the no-load position N of the accelerator lever 114 to a predetermined intermediate operational position (when the pivot center of the drive arm 121, the center of the linking pin 123, and the pivot center of the follower arm 122 are aligned on one straight line), and gradually increases while the drive arm 121 pivots from the intermediate operational position of the accelerator lever 114 to the full load position F.

The distance S2 corresponds to an effective length of the follower arm 122, and whereas this effective length S2 changes as described above, an effective length of the drive arm 121 integrally including the linking pin 123, that is, the distance between the pivot center of the drive arm 121 and the center of the linking pin 123, does not change; when the effective length S2 of the follower arm 122 decreases, a return torque given to the drive arm 121 by the spring force of the second return spring 127 via the follower arm 122 increases, but on the other hand when the effective length S2 of the follower arm 122 increases, the return torque given to the drive arm 121 by the spring force of the second return spring 127 via the follower arm 122 decreases.

Therefore, when the accelerator lever 114 is pivoted from the no-load position N to the full load position F, the return moment given to the drive arm 121 by the spring force of the second return spring 127 via the follower arm 122 and the linking pin 123 tends to increase during the first half of pivoting as shown by line b in FIG. 19, and tends to decrease during the second half of pivoting.

Since the return torques due to the spring forces of the first and second return springs 125 and 127 act on the accelerator lever 114 at the same time, while pivoting the accelerator lever 114 from the no-load position N to the full load position F, the operating load of the accelerator lever 114 tends to increase during the first half of pivoting as shown by line c in FIG 19, and tends to decrease during the second half of pivoting. That is, an operating load peak value appears in a predetermined intermediate operating position of the accelerator lever 114. Such operating load characteristics of the accelerator lever 114 give the acceleration operation a light feel for the driver, enables the accelerator lever 114 to be easily held, particularly at the full load position F, which is used for a long time, and can contribute to a reduction in fatigue of the driver.

The accelerator sensor 117 detects the rotational angle of the accelerator lever 114 from the no-load position N via the linkage 120, and outputs a signal corresponding thereto to an electronic control unit (not illustrated). The electronic control unit controls the output of the electric motor 53 according to the signal. Specifically, when the accelerator lever 114 is held at the no-load position N, an electromagnetic brake (not illustrated) provided on the electric motor 53 is put into an operating state so as to maintain the small-sized electric vehicle V in a stopped state, and when the accelerator lever 114 is pivoted from the no-load position N in the acceleration direction A, the electromagnetic brake is put into a non-operating state, the output of the electric motor 53 increases, and the small-sized electric vehicle V can be started and accelerated.

While traveling, when the accelerator lever 114 is released, the lever 114 is returned to the no-load position N by urging forces of the first and the second return springs 125 and 127; accompanying this, a regenerative braking force is generated in the electric motor 53 so as to decelerate the small-sized electric vehicle V, and when it attains a predetermined vehicle speed or less, the electromagnetic brake operates. In this way, in accordance with use of the first and second return springs 125 and 127, even in the event of one of the return springs 125 and 127 being broken, the accelerator lever 114 can reliably be returned to the no-load position N by the other normal return spring.

Since left and right end parts of the accelerator lever 114 are equipped with the pair of operating parts 114b and 114b disposed in front of the left and right grips 3g and 3g, the driver D can carry out an acceleration operation by either the left or right hand or by both hands, and in particular in the case of both hands, since the operational load imposed on one hand is halved, it is possible to carry out an acceleration operation with little effort, and the operability is good.

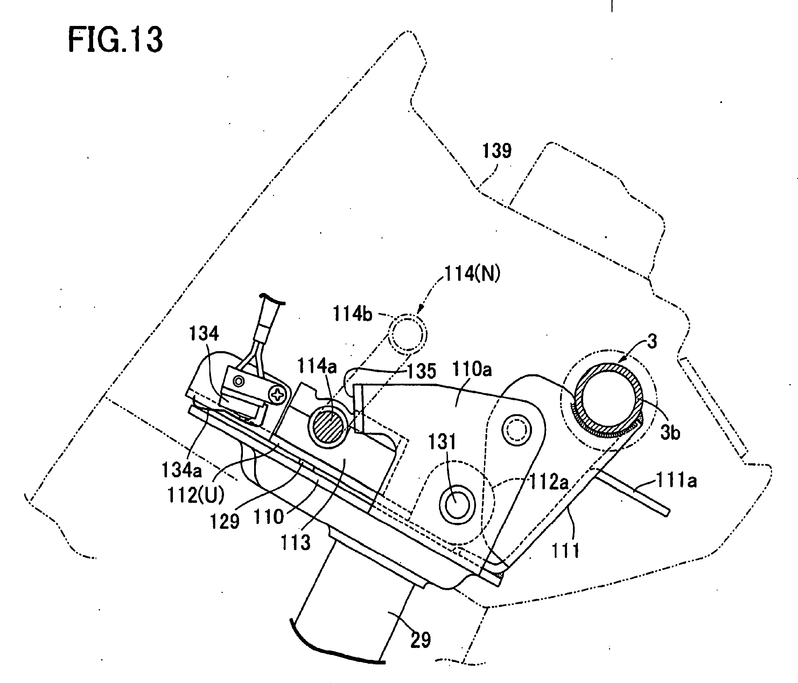

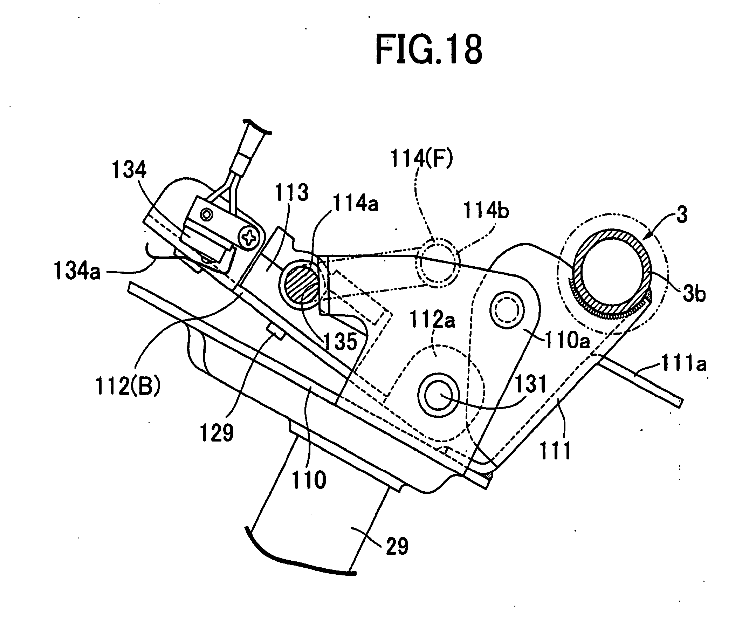

The relationship between the pivot plate 112 and the handlebar base plate 110 is explained by reference to FIG. 13 and FIG 18.

The pivot plate 112 has on its rear end part a pair of raised left and right ear portions 112a and 112a', and a support tube 130 extending in parallel to the grips 3g and 3g is secured to these ear portions 112a and 112a' so as to run therethrough. This support tube 130 is held between a pair of side walls 110a and 110a rising from left and right opposite edges of the handlebar base plate 110, and is pivotably connected to the side walls 110a and 110a via a pivot shaft 131 extending in parallel to the grips 3g and 3g. The pivot plate 112 can pivot around the pivot shaft 131 between a lower, non-operational position U (FIG. 13) and an upper, braking position B (FIG. 18); the non-operational position U is restricted by a projection 129, which projects from a lower face of the pivot plate 112, abutting against an upper face of the handlebar base plate 110, the braking position B is restricted by the shaft portion 114a of the accelerator lever 114 abutting against stopper parts 135 and 135 formed on the left and right side walls 110a and 110a, and a third return spring 132 urging the pivot plate 112 toward the non-operational position U by a predetermined set load is provided in a stretched state between one ear portion 112a' and a spring latching part 133 on the handlebar base plate 110. The set load of the third return spring 132 is set so as to be larger than that of the first return spring 125, and it normally holds the handlebar base plate 110 in the non-operational position U. It is therefore not pivoted by an acceleration operation given by the driver D to the operating parts 114b and 114b of the accelerator lever 114.

A brake switch 134 capable of operating the electromagnetic brake is mounted on the pivot plate 112, and this brake switch 134 is disposed so that its operating piece 134a abuts against an upper face of the handlebar base plate 110. When the pivot plate 112 is held in the non-operational position U, the operating piece 134a is pressed by the handlebar base plate 110 and this brake switch 134 attains an OFF state and maintains the electromagnetic brake in an non-operating state, and when the pivot plate 112 is pivoted from the non-operational position U toward the braking position B, the operating piece 134a is separated from the switch main body and it attains an ON state, puts the electromagnetic brake in an operating state, and at the same time puts the electric motor 53 in a regenerative braking state.

Therefore, when emergency braking is required, strongly holding the operating parts 114b and 114b of the accelerator lever 114 together with the grips 3g and 3g and strongly pulling the accelerator lever 114 toward the grips 3g and 3g side allows a strong pulling force on the accelerator lever 114 to be transmitted, as shown in FIG 18, to the pivot plate 112 via the bearing stands 113 and 113, and allows the pivot plate 112 to immediately pivot toward the braking position B side against the set load of the third return spring 132; the brake switch 134 therefore attains an ON state so as to operate the electromagnetic brake, the electric motor 53 is put into a regenerative braking state, and the small-sized electric vehicle V can be stopped suddenly.

In this process, pivoting the pivot plate 112 around the pivot shaft 131 is effective in always obtaining smooth pivoting of the pivot plate 112 regardless of variations among individuals with respect to the direction in which the operating parts 114b and 114b of the accelerator lever 114 are pulled toward the grips 3g and 3g side and, moreover, it is unnecessary to carry out special maintenance inspections in order to guarantee smooth pivoting of the pivot plate 112.

Furthermore, since the emergency braking operation, in which the operating parts 114b and 114b of the accelerator lever 114 are pulled toward the grips 3g and 3g side, normally has an operating direction different from that of the acceleration operation, which makes the operating parts 114b and 114b go downward, the pivot plate 112 can reliably be pivoted by the emergency braking operation.

Furthermore, when the accelerator lever 114 attains the full load position F in which the movable stopper member 115 abuts against the second stopper face 116b of the fixed stopper member 116, even if the above emergency braking operation is carried out, the operating force can pivot the pivot plate 112 instantaneously via the two stopper members 115 and 116, and there is no waste of the operating force.

Moreover, as in the case with the acceleration operation, since the driver can carry out an emergency braking operation by either the left or right hand or by both hands, the operability is good.

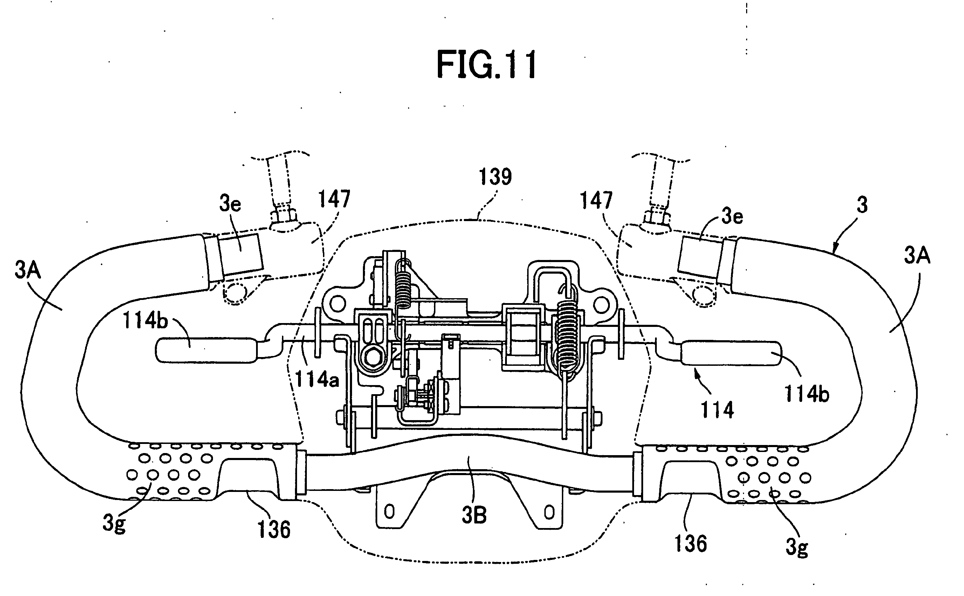

As shown in FIG 10 and FIG 11, depressions 136 and 136 in which the bases of thumbs Ha of hands of the driver D holding the grips 3g and 3g are fitted are formed in rear faces of the left and right grips 3g and 3g. By so doing, while maintaining sufficient gaps for preventing material from being caught between the left and right grips 3g and 3g and the left and right operating parts 114b and 114b of the accelerator lever 114, the driver D puts the bases of the thumbs Ha of the hands H holding the grips 3g and 3g within the depression 136, all of the fingers can be made to be as close as possible to the accelerator lever 114, even a driver having relatively small hands can easily apply an operating force to the operating part 114b, and the operability is thus improved.

As described above, maintaining a sufficient gap for preventing material from being caught between each of the left and right grips 3g and 3g and the accelerator lever 114 brings the effect that, for example, as shown in FIG 10, in the case of an acceleration operation in which, while the left hand remains holding the left grip 3g, the right operating part 114b of the accelerator lever 114 is pulled by the right hand, even if the left operating part 114b moves toward the left hand, which is still holding the left grip, the left hand is not made to feel compressed. Such an effect is also exhibited at the time of the above-mentioned emergency braking operation, in which one operating part 114b is strongly pulled toward the grip 3g side by one hand.

Moreover, since the two operating parts 114b and 114b of the accelerator lever 114 are disposed within the loop of the loop-shaped handlebars 3, it is possible to protect the operating parts 114b and 114b by blocking an obstruction approaching the operating parts 114b and 114b from the front or the side by means of the handlebars 3.

Furthermore, a pair of left and right brackets 111a and 111a projecting rearward are formed on the stay 111 supporting the handlebars 3, and a control box 139 disposed within the loop of the handlebars 3 is mounted on these brackets 111a and 111a and the handlebar base plate 110. This control box 139 is arranged so as to house, in addition to the shaft portion 114a of the accelerator lever 114 and the connecting portion 3B of the handlebars 3, a control system operated by the accelerator lever 114, that is, the linkage 120, the accelerator sensor 117, the pivot plate 112, the emergency brake switch 134, etc.

A display 140 displaying remaining battery level, etc. is disposed in a front section of an upper face of the control box 139, a vehicle speed limit setting dial 141, a forward/reverse switch 142, and a horn switch 143 are disposed in a middle section thereof, and a power supply switch 144 and left and right direction indicator switches 145 and 145 are disposed in a rear section thereof.

Since the loop-shaped handlebars 3 are disposed so that the free end portions 3e and 3e face the front of the vehicle and the connecting portion 3B faces the rear of the vehicle, and the grips 3g and 3g are formed in a straight section on the connecting portion 3B side of the left and right U-shaped portions 3A and 3A, the driver D can easily check the road surface condition immediately in front of the vehicle body through a space between the free end portions 3e and 3e, which are spaced from each other, while the grips 3g and 3g are held, and the field of vision of the driver D increases.

Furthermore, since a majority of the control box 139 arranged by utilizing the space within the loop of the handlebars 3 occupies a position in front of the grips 3g and 3g, the visibility of the control box 139 is good, and switches on the control box 139 can be operated easily Moreover, since the control box 139 covers a control section operated by the accelerator lever 114, that is, the linkage 120, the accelerator sensor 117, the pivot plate 112, the emergency brake switch 134, etc., the appearance can be made good.

Similarly as shown in FIG 10 and FIG 11, in the handlebars 3, cylindrical mirror holders 147 and 147 are secured by fitting them onto the mutually spaced apart free end portions 3e and 3e of the left and right U-shaped portions 3A and 3A, and each mirror holder 147 is equipped with a support stay 149 for a rearview mirror 148.

In this way, utilizing the free end portions 3e and 3e of the left and right U-shaped portions 3A and 3A enables the cylindrical mirror holders 147 and 147 to be mounted easily, and also enables a good appearance to be obtained. Moreover, since the rearview mirrors supported by these mirror holders 147 and 147 are disposed so as to be spaced forward from the grips 3g and 3g and they are also spaced forward from the driver D, the driver can easily look the rearview mirrors 148 without greatly displacing the line of sight, and the visibility of the rearview mirror 148 improves, thus increasing the rear field of vision.

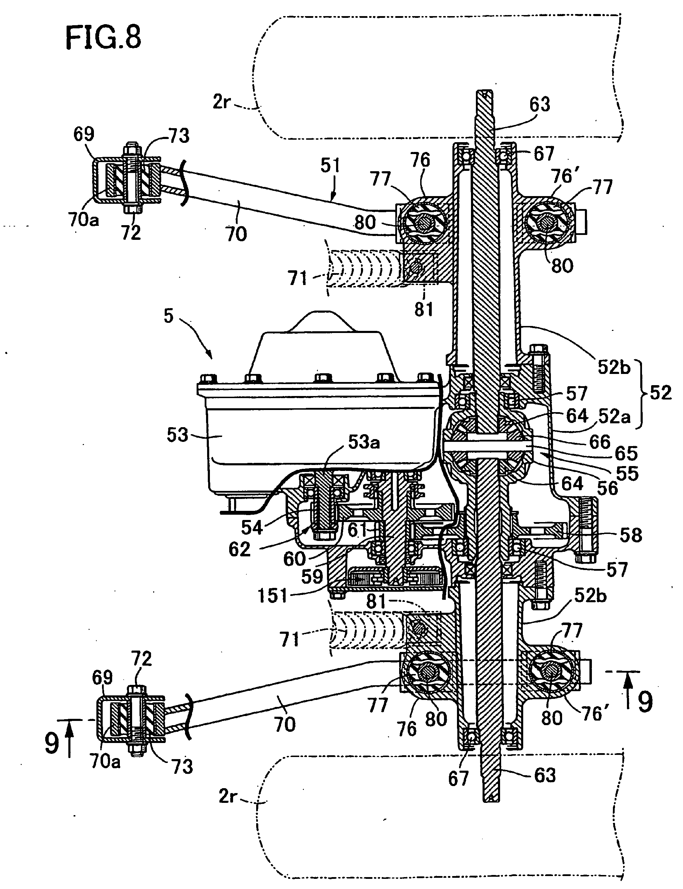

As shown in FIG 10, a parking brake lever 150 is mounted on one of the mirror holders 147 and 147, and in accordance with a braking operation thereof, a drum brake 151 (see FIG 8) provided in the reduction gear 62 is operated.

The present invention is not limited to the above embodiment, and may be modified in a variety of ways as long as the modifications do not depart from the spirit and scope of the present invention. For example, the rear wheel 2r may be a single wheel, thus forming the small-sized electric vehicle V as a tricycle. Furthermore, one of the first and second return springs 125 and 127 may be omitted.

## Claims

1. A control system for a small-sized electric vehicle in which an operating part (114b) of an accelerator lever (114) for controlling the output of an electric motor (53) for driving the vehicle is disposed in front of at least one of a pair of left and right grips (3g, 3g) of handlebars (3) rotatably supported in a steering column (28) disposed in front of a riding seat (6), a return spring (125, 127) urging the accelerator lever (114) in a deceleration direction (R) is connected to the accelerator lever (114), and a driver (D) can push down the operating part (114b) against the urging force of the return spring (125, 127) with a hand (H) that is holding the grip (3g, 3g),
**characterized in that** a pivot plate (112) is connected, via a pivot shaft (131) that is substantially parallel to the grip (3g, 3g), to a support member (110) integrally joined to the handlebars (3) and disposed in front of the grip (3g, 3g) so that the pivot plate (112) can pivot between a lower, non-operational position (U) and an upper, braking position (B) with the rear end side as a fulcrum, another return spring (132) is connected to the pivot plate (112) so as to urge the pivot plate (112) toward the non-operational position (U) with a set load that is larger than that of the return spring (125, 127) for the accelerator lever (114), and a vehicle stopping device (134) is actuated as a result of the pivot plate (112) pivoting toward the braking position (B) side when the operating part (114b) of the accelerator lever (114) on the pivot plate (112) is pulled strongly toward the grip (3g, 3g) side.

2. The control system for the small-sized electric vehicle according to Claim 1,
wherein stopper means (115, 116) is provided between the accelerator lever (114) and the pivot plate (112), the stopper means (115, 116) regulating a no-load position (N) that is a limit for pivoting of the lever (114) in the deceleration direction (R) and a full load position (F) that is a limit for pivoting of the lever (114) in an acceleration direction (A), and when the accelerator lever (114) is in the full load position (F), if the operating part (114b) of the lever (114) is pulled strongly toward the grip (3g, 3g) side, the pivot plate (112) is pivoted toward the braking position (B) side via the stopper means (115, 116).

3. The control system for the small-sized electric vehicle according to Claim 1 or 2,
wherein the accelerator lever (114) is provided with a left and right pair of the operating parts (114b, 114b) corresponding to the left and right grips (3g, 3g).

## Patentansprüche

1. Steuer-/Regelsystem für ein elektrisches Kleinfahrzeug, in welchem ein Bedienteil (114b) eines Beschleunigungshebels (114) zum Steuern/Regeln der Ausgabe eines Elektromotors (53) zum Antreiben des Fahrzeugs vor wenigstens einem von einem Paar von linken und rechten Griffen (3g, 3g) von Lenkstangen (3) angeordnet ist, welche drehbar in einer Lenksäule (28) gelagert sind, die vor einem Fahrersitz (6) angeordnet ist, eine Rückstellfeder (125, 127), die den Beschleunigungshebel (114) in eine Verzögerungsrichtung (R) drängt, mit dem Beschleunigungshebel (114) verbunden ist, und ein Fahrer (D) das Bedienteil (114b) gegen die Kraft der Rückstellfeder (125, 127) mit einer Hand (H), die den Griff (3g, 3g) hält, herunter drücken kann,
**dadurch gekennzeichnet, dass** eine Schwenkplatte (112) vermittels einer Schwenkwelle (131), die im Wesentlichen parallel zum dem Griff (3g, 3g) verläuft, mit einem Lagerelement (110) verbunden ist, das integral mit den Lenkstangen (3) verbunden ist und vor dem Griff (3g, 3g) angeordnet ist, so dass die Schwenkplatte (112) zwischen einer tieferen Nicht-Betriebs-Position (U) und einer oberen Brems-Position (B) um die hintere Endseite als Drehpunkt schwenken kann, wobei eine andere Rückstellfeder (132) mit der Schwenkplatte (112) so verbunden ist, um die Schwenkplatte (112) zu der Nicht-Betriebs-Position (U) hin zu drängen, mit einer eingestellten Last, die größer ist als die der Rückstellfeder (125, 127) für den Beschleunigungshebel (114), und eine Fahrzeug-Stopp-Vorrichtung (134) betätigt wird als ein Ergebnis davon, dass die Schwenkplatte (112) zu der Seite der Brems-Position (B) hin schwenkt, wenn das Bedienteil (114b) des Beschleunigungshebels (114) an der Schwenkplatte (112) stark zu der Seite des Griffs (3g, 3g) hin gezogen wird,.

2. Steuer-/Regelsystem für das elektrische Kleinfahrzeug nach Anspruch 1,
wobei Stopp-Mittel (115, 116) zwischen dem Beschleunigungshebel (114) und der Schwenkplatte (112) vorgesehen sind, wobei die Stopp-Mittel (115, 116) eine Null-Last-Position (N) regulieren, die eine Grenze für das Schwenken des Hebels (114) in die Verzögerungsrichtung (R) ist, und eine Voll-Last-Position (F), die eine Grenze für das Schwenken des Hebels (114) in eine Beschleunigungsrichtung (A) ist, und dann, wenn der Beschleunigungshebel (114) sich in der Voll-Last-Position (F) befindet, falls das Bedienteil (114b) des Hebels (114) stark zu der Seite des Griffs (3g, 3g) hin gezogen wird, die Schwenkplatte (112) vermittels der Stop-Mittel (115, 116) zu der Seite der Brems-Position (B) hin geschwenkt wird.

3. Steuer-/Regelsystem für das elektrische Kleinfahrzeug nach Anspruch 1 oder 2,
wobei der Beschleunigungshebel (114) mit einem linken und rechten Paar von den Bedienteilen (114b,114b) versehen ist, die den linken und rechten Griffen (3g, 3g) entsprechen.

## Revendications

1. Système de commande pour un petit véhicule électrique dans lequel une partie de commande (114b) d'un levier d'accélérateur (114) pour commander la sortie d'un moteur électrique (53) pour entraîner le véhicule, est disposée en face d'au moins l'une d'une paire de poignées gauche et droite (3g, 3g) du guidon (3) supporté en rotation dans une colonne de direction (28) disposée en face d'un siège (6), un ressort de rappel (125, 127) poussant le levier d'accélérateur (114) dans une direction de décélération (R) est raccordé au levier d'accélérateur (114), et un conducteur (D) peut abaisser par poussée la partie de commande (114b) contre la force de poussée du ressort de rappel (125, 127) avec une main (H) qui tient la poignée (3g, 3g),
**caractérisé en ce qu'**une plaque de pivot (112) est raccordée, via un arbre de pivot (131) qui est sensiblement parallèle à la poignée (3g, 3g), à un élément de support (110) assemblé de manière solidaire au guidon (3) et disposé en face de la poignée (3g, 3g) de sorte que la plaque de pivot (112) peut pivoter entre une position basse non opérationnelle (U) et une position haute de freinage (B) avec le côté d'extrémité arrière en tant que pivot, un autre ressort de rappel (132) est raccordé à la plaque de pivot (112) afin de pousser la plaque de pivot (112) vers la position non opérationnelle (U) avec une charge déterminée qui est supérieure à celle du ressort de rappel (125, 127) pour le levier d'accélérateur (114), et un dispositif d'arrêt de véhicule (134) est actionné étant donné que la plaque de pivot (112) pivote vers le côté de la position de freinage (B) lorsque la partie de commande (114b) du levier d'accélérateur (114) sur la plaque de pivot (112) est tirée énergiquement vers le côté de la poignée (3g, 3g).

2. Système de commande pour un petit véhicule électrique selon la revendication 1, dans lequel des moyens d'arrêt (115, 116) sont prévus entre le levier d'accélérateur (114) et la plaque de pivot (112), les moyens d'arrêt (115, 116) régulant une position sans charge (N) qui est une limite pour le pivotement du levier (114) dans la direction de décélération (R) et une position de pleine charge (F) qui est une limite pour le pivotement du levier (114) dans une direction d'accélération (A) et lorsque le levier d'accélérateur (114) est dans la position de pleine charge (F), si la partie de commande (114b) du levier (114) est tirée énergiquement vers le côté de la poignée (3g, 3g), la plaque de pivot (112) est pivotée vers le côté de la position de freinage (B) via les moyens d'arrêt (115, 116).

3. Système de commande pour un petit véhicule électrique selon la revendication 1 ou 2, dans lequel le levier d'accélérateur (114) est prévu avec une paire gauche et droite des parties de commande (114b, 114b) correspondant aux poignées gauche et droite (3g, 3g).
